# EUROPEAN PATENT APPLICATION

(11) **EP 3 375 906 A1**
(43) Date of publication of application: **19.09.2018**
(21) Application number: 17189372.0
(22) Date of filing: 05.09.2017
(51) Int. Cl.: C25B 1/04, C25B 11/04, C25B 1/00, C25B 3/04

(54) **ELECTROCHEMICAL REACTION DEVICE AND METHOD OF MANUFACTURING ANODE FOR ELECTROCHEMICAL REACTION DEVICE**

(30) Priority: 17.03.2017 JP 2017053301
(71) Applicant: KABUSHIKI KAISHA TOSHIBA, Minato-ku Tokyo 105-8001 (JP)
(72) Inventor: Motoshige, Asahi, Tokyo, 105-8001 (JP); Kitagawa, Ryota, Tokyo, 105-8001 (JP); Sugano, Yoshitsune, Tokyo, 105-8001 (JP); Ono, Akihiko, Tokyo, 105-8001 (JP); Mikoshiba, Satoshi, Tokyo, 105-8001 (JP); Kudo, Yuki, Tokyo, 105-8001 (JP); Tamura, Jun, Tokyo, 105-8001 (JP); Yamagiwa, Masakazu, Tokyo, 105-8001 (JP); Tsutsumi, Eishi, Tokyo, 105-8001 (JP); Tsukagoshi, Takayuki, Tokyo, 105-8001 (JP)
(74) Representative: Hoffmann Eitle

(57) **Abstract**

An anode of an electrochemical reaction device includes: a stack having a conductive substrate and an oxide layer on the conductive substrate, the conductive substrate containing nickel or iron, and the oxide layer containing a nickel oxide or an iron oxide; and an oxidation catalyst layer disposed on the oxide layer and containing an oxidation catalyst to oxidize water. A Raman spectrum of the oxide layer measured by a Raman spectroscopic analysis has a peak at a Raman shift of 500 cm⁻¹ or more and 600 cm⁻¹ or less or at a Raman shift of 1270 cm⁻¹ or more and 1370 cm⁻¹ or less.

## Description

### FIELD

Arrangements described herein generally relate to an electrochemical reaction device and a method of manufacturing an anode for an electrochemical reaction device.

### BACKGROUND

From the viewpoints of energy problems and environmental problems, an artificial photosynthesis technology effectively reducing CO₂ by light energy such as photosynthesis of plants has been required. The plants use a system that is excited by the light energy called a Z scheme in two stages. That is, the plants obtain electrons from water (H₂O) by the light energy, and synthesize cellulose and saccharides by reducing carbon dioxide (CO₂) by using these electrons. As a device performing artificial photosynthesis, development of an electrochemical reaction device reducing (decomposing) CO₂ by the light energy has been in progress.

The electrochemical reaction device includes a cathode and an anode. The cathode and the anode are immersed in an electrolytic solution containing water, carbon dioxide, and so on, for example. The electrochemical reaction device produces oxygen by an oxidation reaction of water caused by the anode, and produces a carbon compound, hydrogen, and the like by a reduction reaction of carbon dioxide caused by the cathode. In this manner, it is possible to produce desired chemical substances by the reduction reaction and the oxidation reaction in the electrochemical reaction device. In order to increase the efficiency of the above-described reduction reaction and oxidation reaction, it is preferred to use a catalyst material having high catalytic activity. Further, a substrate intended for supporting the catalyst material preferably has a high durability against the electrolytic solution.

### RELEVANT REFERENCES

### Patent Reference

Reference1: JPA 2013-253270
Reference2: JPA 2013-253269

### BRIEF DESCRIPTION OF THE DRAWINGS

FIG. 1 is a schematic view illustrating a structure example of an electrochemical reaction device.
FIG. 2 is a view showing an example of a SEM observation image of an anode.
FIG. 3 is a view illustrating one example of a Raman spectrum of an oxide layer.
FIG. 4 is a view illustrating one example of the Raman spectrum of the oxide layer.
FIG. 5 is a view illustrating the relationship between time and a current density resulting from measurement of a constant potential of the anode.

### DETAILED DESCRIPTION

An electrochemical reaction device according to an arrangement includes: an electrolytic solution tank including a first room to store a first electrolytic solution containing carbon dioxide and a second room to store a second electrolytic solution containing water; a cathode disposed inside the first room and configured to produce a carbon compound by a reduction reaction of the carbon dioxide; an anode disposed inside the second room and configured to produce oxygen by an oxidation reaction of the water; and a power supply connected to the cathode and the anode. The anode includes: a stack selected from the group consisting of a first stack and a second stack, the first stack having a first conductive substrate and a first oxide layer on the first conductive substrate, the first conductive substrate containing nickel, the first oxide layer containing a nickel oxide, the second stack having a second conductive substrate and a second oxide layer on the second conductive substrate, the second conductive substrate containing iron, and the second oxide layer containing an iron oxide; and an oxidation catalyst layer disposed on the stack and containing an oxidation catalyst to oxidize the water. A Raman spectrum of the first oxide layer measured by a Raman spectroscopic analysis has a first peak at a Raman shift of 500 cm⁻¹ or more and 600 cm⁻¹ or less, or a Raman spectrum of the second oxide layer measured by the Raman spectroscopic analysis has a second peak at a Raman shift of 1270 cm⁻¹ or more and 1370 cm⁻¹ or less.

Hereinafter, there will be explained an arrangement with reference to the drawings. The drawings are schematic and, for example, dimensions such as thickness and width of components may differ from actual dimensions of the components. Besides, in the arrangement, substantially the same components are denoted by the same reference signs and the description thereof will be omitted in some cases. A term of "connect" in the specification is not limited to a case of connecting directly but may include a meaning of connecting indirectly.

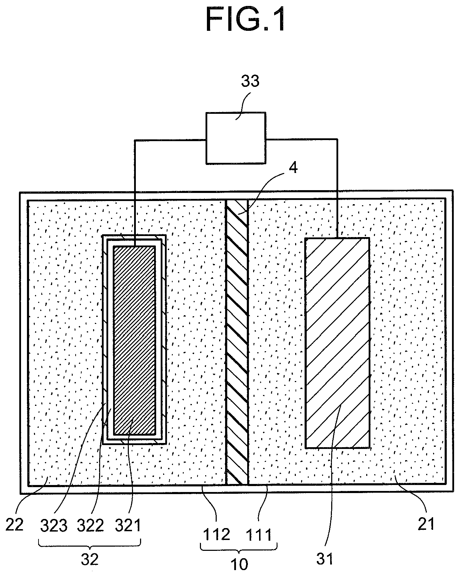

FIG. 1 is a schematic view illustrating a composition example of an electrochemical reaction device. The electrochemical reaction device illustrated in FIG. 1 includes an electrolytic solution tank 10, a cathode 31, an anode 32, a power supply 33, and an ion exchanger 4.

The electrolytic solution tank 10 includes a room 111 and a room 112. The shape of the electrolytic solution tank 10 is not particularly limited as long as it is a solid shape having cavities being the rooms. The electrolytic solution tank 10 contains quartz white plate glass, polystyrol, methacrylate, and the like, for example. A material transmitting light therethrough may be used for a part of the electrolytic solution tank 10, and a resin material may be used for its rest. Examples of the resin material include a polyetheretherketone (PEEK) resin, a polyamide (PA) resin, a polyvinylidene fluoride (PVDF) resin, a polyacetal (POM) resin (copolymer), a polyphenyleneether (PPE) resin, an acrylonitrile-butadiene-styrene copolymer (ABS), a polypropylene (PP) resin, a polyethylene (PE) resin, and so on.

The room 111 stores an electrolytic solution 21. The electrolytic solution 21 contains substances to be reduced such as carbon dioxide, for example. Further, the electrolytic solution 21 may contain hydrogen ions. Changing the amount of water and electrolytic solution components contained in the electrolytic solution 21 can change the reactivity and thereby change the selectivity of a substance to be reduced and the ratio of a chemical substance to be produced. The room 111 partially has a space portion having gases to be contained in reactants and products. Further, a flow path to be connected to the room 111, and the like may be provided. The flow path may be used as an electrolytic solution flow path and a product flow path.

The room 112 stores an electrolytic solution 22. The electrolytic solution 22 contains substances to be oxidized such as, for example, water, or an organic matter such as alcohol or amine, and an inorganic oxide such as iron oxide. The electrolytic solutions 21, 22 may contain redox couples as necessary. As the redox couple, for example, Fe³⁺/Fe²⁺ and IO³⁻/I⁻ can be cited. The electrolytic solution tank 10 may include a stirrer that stirs the electrolytic solutions 21, 22.

The electrolytic solution 22 may contain the same substance as that in the electrolytic solution 21. In this case, the electrolytic solution 21 and the electrolytic solution 22 may be recognized as one electrolytic solution. The room 112 partially has a space portion having gases to be contained in reactants and products. Further, a flow path to be connected to the room 112, and the like may be provided.

The pH of the electrolytic solution 22 is preferred to be higher than the pH of the electrolytic solution 21. This facilitates migration of hydrogen ions, hydroxide ions, and the like. A liquid junction potential due to the different in pH allows oxidation-reduction reaction to effectively proceed.

Examples of the electrolytic solution containing carbon dioxide applicable to the electrolytic solution 21 include aqueous solutions containing LiHCO₃, NaHCO₃, KHCO₃, CsHCO₃, phosphoric acid, boric acid, and so on. The electrolytic solution containing carbon dioxide may contain alcohols such as methanol, ethanol, and acetone. The electrolytic solution containing water may be the same as the electrolytic solution containing carbon dioxide. However, the absorption amount of carbon dioxide in the electrolytic solution containing carbon dioxide is preferred to be high. Accordingly, as the electrolytic solution containing carbon dioxide, a solution different from the electrolytic solution containing water may be used. The electrolytic solution containing carbon dioxide is preferred to be an electrolytic solution that decreases the reduction potential of carbon dioxide, has high ion conductivity, and contains a carbon dioxide absorbent that absorbs carbon dioxide.

As the electrolytic solution containing water applicable to the electrolytic solution 22, for example, an aqueous solution containing an arbitrary electrolyte can be used. This solution is preferred to be an aqueous solution accelerating an oxidation reaction of water. Examples of the aqueous solution containing an electrolyte include aqueous solutions containing phosphoric acid ions (PO₄²⁻), boric acid ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃⁻), and so on.

As the above-described electrolytic solution, for example, an ionic liquid that is made of a salt of cations such as imidazolium ions or pyridinium ions and anions such as BF₄⁻ or PF₆⁻ and that is in a liquid state in a wide temperature range, or its aqueous solution can be used. Other examples of the electrolytic solution include amine solutions of ethanolamine, imidazole, and pyridine, or aqueous solutions thereof. Examples of amine include primary amine, secondary amine, and tertiary amine. These electrolytic solutions may have high ion conductivity, have a property of absorbing carbon dioxide, and have characteristics of decreasing the reduction energy.

Examples of the primary amine include methylamine, ethylamine, propylamine, butylamine, pentylamine, hexylamine, and so on. Hydrocarbons of the amine may be substituted by alcohol, halogen, or the like. Examples of the amine whose hydrocarbons are substituted include methanolamine, ethanolamine, chloromethyl amine, and so on. Further, an unsaturated bond may exist. These hydrocarbons are the same in the secondary amine and the tertiary amine.

Examples of the secondary amine include dimethylamine, diethylamine, dipropylamine, dibutylamine, dipentylamine, dihexylamine, dimethanolamine, diethanolamine, dipropanolamine, and so on. The substituted hydrocarbons may be different. This also applies to the tertiary amine. Examples in which the hydrocarbons are different include methylethylamine, methylpropylamine, and so on.

Examples of the tertiary amine include trimethylamine, triethylamine, tripropylamine, tributylamine, trihexylamine, trimethanolamine, triethanolamine, tripropanolamine, tributanolamine, triexanolamine, methyldiethylamine, methyldipropylamine, and so on.

Examples of the cation of the ionic liquid include 1-ethyl-3-methylimidazolium ions, 1-methyl-3-propylimidazolium ions, 1-butyl-3-methylimidazole ions, 1-methyl-3-pentylimidazolium ions, 1-hexyl-3-methylimidazolium ions, and so on.

A second place of the imidazolium ion may be substituted. Examples of the cation having the imidazolium ion in which the second place is substituted include 1-ethyl-2,3-dimethylimidazolium ions, 1-2-dimethyl-3-propylimidazolium ions, 1-butyl-2,3-dimethylimidazolium ions, 1,2-dimethyl-3-pentylimidazolium ions, 1-hexyl-2,3-dimethylimidazolium ions, and so on.

Examples of the pyridinium ion include methylpyridinium, ethylpyridinium, propylpyridinium, butylpyridinium, pentylpyridinium, hexylpyridinium, and so on. In both of the imidazolium ion and the pyridinium ion, an alkyl group may be substituted, or an unsaturated bond may exist.

Examples of the anion include fluoride ions, chloride ions, bromide ions, iodide ions, BF₄⁻, PF₆⁻, CF₃COO⁻, CF₃SO₃⁻, NO₃⁻, SCN⁻, (CF₃SO₂)₃C⁻, bis(trifluoromethoxysulfonyl)imide, bis(trifluoromethoxysulfonyl)imide, bis(perfluoroethylsulfonyl)imide, and so on. A dipolar ion in which the cation and the anion of the ionic liquid are coupled by hydrocarbons may be used. A buffer solution such as a potassium phosphate solution may be supplied to the rooms 111, 112.

The cathode 31 is a cathode for the electrochemical reaction device. The cathode 31 is disposed in the room 111 to be immersed in the electrolytic solution 21. The cathode 31 contains a reduction catalyst intended for producing a carbon compound and hydrogen by the reduction reaction of carbon dioxide, for example. Examples of the reduction catalyst include materials decreasing activation energy for reducing the carbon dioxide. In other words, the examples include materials that lower an overvoltage when carbon compounds are produced by the reduction reaction of carbon dioxide. For example, a metal material or a carbon material can be used. As the metal material, for example, a metal such as gold, aluminum, copper, silver, platinum, palladium, or nickel, or an alloy containing the metal can be used. As the carbon material, for example, graphene, carbon nanotube (CNT), fullerene, ketjen black, or the like can be used. The reduction catalyst is not limited to these, and, for example, a metal complex such as a Ru complex or a Re complex, or an organic molecule having an imidazole skeleton or a pyridine skeleton may be used as the reduction catalyst. Besides, a plurality of materials may be mixed.

The carbon compound to be produced by the reduction reaction differs depending on the kind of the reduction catalyst or the like, and examples thereof include carbon monoxide (CO), formic acid (HCOOH), methane (CH₄), methanol (CH₃OH), ethane (C₂H₆), ethylene (C₂H₄), ethanol (C₂H₅OH), formaldehyde (HCHO), ethylene glycol, and so on.

The reduction catalyst can be regenerated from a deterioration state by cleaning by means of electrical oxidation-reduction such as Cyclic Voltammetry (CV), adding a compound having a cleaning function, or a cleaning effect by means of heat, light, or the like. The cathode 31 is preferred to be one that can be used for or endure such a regeneration of the reduction catalyst. Further, the electrochemical reaction device preferably has such a regenerative function of the reduction catalysts.

The cathode 31 may have a structure of, for example, a thin-film shape, a lattice shape, a granular shape, or a wire shape. The cathode 31 does not necessarily have to be provided with the reduction catalyst. A reduction catalyst provided separately from the cathode 31 may be electrically connected to the cathode 31.

The anode 32 is an anode for the electrochemical reaction device. The anode 32 is disposed in the room 112 to be immersed in the electrolytic solution 22. The anode 32 includes a conductive substrate 321, an oxide layer 322, and an oxidation catalyst layer 323.

The conductive substrate 321 contains nickel or iron, for example. The conductive substrate 321 is not limited to having a plate shape, and may have a porous shape, a thin-film shape, a lattice shape, a granular shape, or a wire shape.

The oxide layer 322 is provided in contact with the conductive substrate 321. The oxide layer 322 may cover the entire surface of the conductive substrate 321. In the case of using the conductive substrate 321 containing nickel, the oxide layer 322 contains a nickel oxide. In the case of using the conductive substrate 321 containing iron, the oxide layer 322 contains an iron oxide.

The oxide layer 322 may be formed by performing a heat treatment at 300°C or more on the conductive substrate 321 in the presence of oxygen, for example. That is, the oxide layer 322 may have a thermal oxidization film of the conductive substrate 321, for example. Further, the oxide layer 322 may be formed in a manner that by using a electrodeposition method, or the like, a precursor of the nickel oxide is deposited on the conductive substrate 321 containing nickel or a precursor of the iron oxide is deposited on the conductive substrate 321 containing iron, to then be heat treated in the presence of oxygen. A metal oxide precursor may be formed by a vacuum deposition method, a sputtering method, or the like, for example.

Physical properties of the oxide layer 322 can be analyzed by a Raman spectroscopic analysis and a Scanning Electron Microscope (SEM) observation, for example.

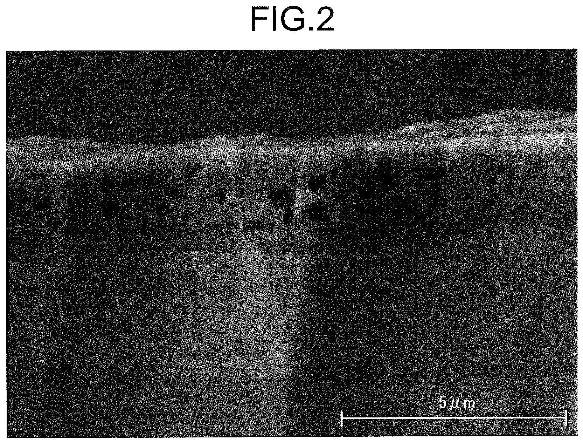

FIG. 2 is a SEM observation image showing a structure example of a nickel oxide layer formed by heat treating a nickel substrate at 900°C or more for one hour. The oxide layer 322 preferably has a thickness thicker than that of a natural oxide film. When the oxide layer 322 has a thickness equal to or less than that of the natural oxide film, an effect by the oxide layer 322 cannot be obtained sufficiently in some cases. Further, a sheet resistance of the oxide layer 322 is preferred to be 1 Ω/ or less. Therefore, the oxide layer 322 preferably has a thickness whose sheet resistance does not exceed 1Ω/. For example, the thickness of the oxide layer 322 is preferred to be 2 µm or less. This makes it possible to suppress generation of resistance when voltage is applied. When the oxide layer 322 having a thickness greater than 2 µm is formed, the sheet resistance increases, so that the effect of the oxide layer 322 cannot be obtained sufficiently in some cases.

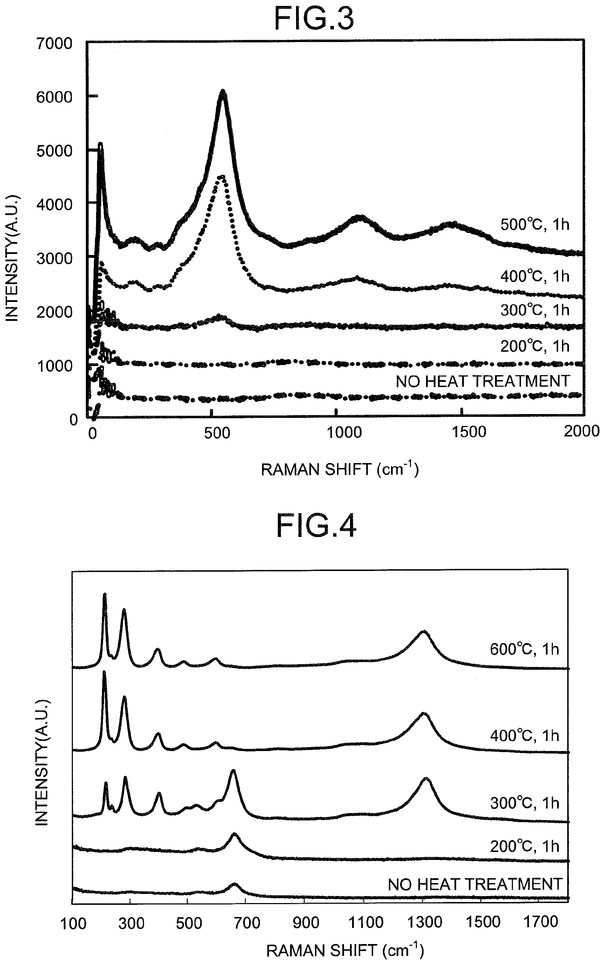

FIG. 3 is a view illustrating a Raman spectrum of an oxide layer formed by heat treating a nickel substrate for one hour. FIG. 3 reveals that the Raman spectrum of the oxide layer formed by heat treating the nickel substrate at 300°C or more has a peak at a Raman shift of 500 cm⁻¹ to 600 cm⁻¹. A natural oxide film of the nickle substrate does not have the above-described peak similarly to the case of no heat treatment, so that the Raman spectroscopic analysis makes it possible to determine whether or not the oxide layer 322 is the natural oxide film.

FIG. 4 is a view illustrating a Raman spectrum of an oxide layer formed by heat treating an iron substrate for one hour. FIG. 4 reveals that the Raman spectrum of the oxide layer formed by heat treating the iron substrate at 300°C or more has a peak at a Raman shift of 1270 cm⁻¹ to 1370 cm⁻¹. A natural oxide film of the iron substrate does not have the above-described peak similarly to the case of no heat treatment, so that the Raman spectroscopic analysis makes it possible to determine whether or not the oxide layer 322 is the natural oxide film.

The oxidation catalyst layer 323 is provided in contact with the surface of the oxide layer 322. The oxidation catalyst layer contains an oxidation catalyst intended for oxidizing water to produce oxygen and the like. As the oxidation catalyst, a material that lowers activation energy for oxidizing the water can be cited. In other words, a material that lowers an overvoltage when oxygen and hydrogen ions are produced by an oxidation reaction of the water can be cited. At least one of constituent elements of the oxidation catalyst of water formed on the metal oxide may be the same as the constituent element of the metal substrate, and examples of the constituent element includes a metal, an oxide of metal, a hydroxide of metal, a nitride of metal, and so on. As a metallic element, for example, Co, Fe, Ni, Mn, Ru, Ir, and so on can be cited. The oxidation catalyst may contain two or more elements. For example, a metal and a metal oxide may be combined. A metal oxide and a metal hydroxide may be combined. One of the metals and another of them may be combined.

Examples of the oxidation catalyst include a binary metal oxide, a ternary metal oxide, a quaternary metal oxide, and so on. Examples of the binary metal oxide include manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and so on. Examples of the ternary metal oxide include Ni-Co-O, La-Co-O, Ni-La-O, Sr-Fe-O, and so on. Examples of the quaternary metal oxide include Pb-Ru-Ir-O, La-Sr-Co-O, and so on. The oxidation catalyst is not limited to the above, and a metal complex such as a Ru complex or a Fe complex can also be used.

The oxidation catalyst layer 323 is formed by, for example, a sputtering method, a vapor deposition method, an already known vacuum film forming method such as an Atomic Layer Deposition (ALD) method, an electrodeposition method, an already known wet film forming method such as electroless plating, or the like.

The power supply 33 is electrically connected to the cathode 31 and the anode 32. With use of electric energy supplied from the power supply 33, the reduction reaction by the cathode 31 and the oxidation reaction by the anode 32 are performed. For example, a wire may connect the power supply 33 and the cathode 31 and connect the power supply 33 and the anode 32. The case of connecting the power supply 33 and the cathode 31 or the anode 32 by a wire or the like is advantageous as a system because the constituent elements are separated by function.

The power supply 33 converts renewable energy into electric energy. Examples of the power supply 33 includes: a system power supply; a power supply that converts kinetic energy such as wind power, water power, geothermal power, or tidal power, or potential energy into electric energy; a photoelectric conversion element that converts light energy into electric energy; power supplies such as a fuel cell and a storage battery that convert chemical energy into electric energy; a device that converts vibrational energy such as sound into electric energy; and so on. The photoelectric conversion element has a function of separating charges using energy of irradiating light such as sunlight. Examples of the photoelectric conversion element include a pin-junction solar cell, a pn-junction solar cell, an amorphous silicon solar cell, a multijunction solar cell, a single crystal silicon solar cell, a polycrystalline silicon solar cell, a dye-sensitized solar cell, an organic thin-film solar cell, and so on. Further, the photoelectric conversion element may form a stack with the cathode 31 and the anode 32 inside the electrolytic solution tank 10.

The ion exchanger 4 can selectively make anions or cations flow. This makes it possible to change the electrolytic solutions that are in contact with the cathode 31 and the anode 32 respectively into electrolytic solutions containing substances different from each other, and the difference in ionic strength, the difference in pH, or the like makes it possible to accelerate the reduction reaction. Further, using the ion exchanger 4 makes it possible to separate the electrolytic solution 21 and the electrolytic solution 22. The ion exchanger 4 has a function of making some ions contained in an electrolytic solution in which both electrodes are immersed transmit therethrough, namely has a function of blocking one kind or more of ions contained in the electrolytic solution. Thereby, it is possible to make the pH differ between the two electrolytic solutions, for example.

As the ion exchanger 4, for example, cation-exchange membranes such as Nafion (registered trademark) and Flemion (registered trademark), and anion-exchange membranes such as NEOSEPTA (registered trademark) and SELEMION (registered trademark) can be cited. Further, when it is not necessary to control ion migration between the two electrolytic solutions, the ion exchanger 4 is not necessarily provided.

The electrochemical reaction device may include a stirrer in order to accelerate supply of ions or a substance to the surface of the electrode. The electrochemical reaction device may include measurement devices such as a thermometer, a pH sensor, a conductivity measuring device, an electrolytic solution analyzer, and a gas analyzer, and by including these measurement devices, parameters in the electrochemical reaction device are preferably controlled.

The electrochemical reaction device may be a batch-type reaction device, or may also be a flow-type reaction device. In the case of the flow-type reaction device, a supply flow path and a discharge flow path of an electrolytic solution are desirably secured. As for the cathode 31 and the anode 32 included in the electrochemical reaction device, a part of the cathode 31 only needs to be in contact with the electrolytic solution 21, and a part of the anode 32 only needs to be in contact with the electrolytic solution 22.

Next, there will be explained an operation example of the electrochemical reaction device. Here, the case of producing carbon monoxide is explained as one example.

The case where as the electrolytic solutions 21, 22, an electrolytic solution containing water and carbon dioxide is used to produce carbon monoxide is explained. Around the anode 32, as expressed by the following formula (1), the water undergoes an oxidation reaction and loses electrons, and oxygen and hydrogen ions are produced. At least one of the produced hydrogen ions migrates to the room through the ion exchanger 4.

2H₂O → 4H⁺ + O₂ + 4e⁻ ... (1)

Around the cathode 31, as expressed by the following formula (2), the carbon dioxide undergoes a reduction reaction, and the hydrogen ions react with the carbon dioxide while receiving the electrons, and carbon monoxide is produced. Further, in addition to the carbon monoxide, hydrogen may be produced by the hydrogen ions receiving the electrons. At this time, the hydrogen may be produced simultaneously with the carbon monoxide.

2CO₂ + 4H+ + 4e⁻ → 2CO + H₂O... (2)

The power supply 33 needs to have an open-circuit voltage equal to or more than a potential difference between a standard oxidation-reduction potential of the oxidation reaction and a standard oxidation-reduction potential of the reduction reaction. For example, the standard oxidation-reduction potential of the oxidation reaction in the formula (1) is 1.23 [V/vs. NHE]. The standard oxidation-reduction potential of the reduction reaction in the formula (2) is -0.1 [V/vs. NHE]. In this case, the open-circuit voltage needs to be 1.33 [V] or more in the reactions of the formula (1) and the formula (2).

The open-circuit voltage of the power supply 33 is preferred to be higher than the potential difference between the standard oxidation-reduction potential of the oxidation reaction and the standard oxidation-reduction potential of the reduction reaction by a value of overvoltages or more. For example, each overvoltage of the oxidation reaction in the formula (1) and the reduction reaction in the formula (2) is 0.2 [V]. The open-circuit voltage is preferred to be 1.73 [V] or more in the reactions of the formula (1) and the formula (2).

The electrochemical reaction device in the arrangement includes the oxide layer on the surface of the conductive substrate of the anode, and the oxidation catalyst layer on the surface of the oxide layer. When as the first electrolytic solution and the second electrolytic solution, an electrolytic solution containing at least one of carbon dioxide, hydrogen carbonate ions, and carbonate ions, for example, is used without the oxide layer being provided, the conductive substrate is easily dissolved in the above-described electrolytic solution. Therefore, the conductive substrate being dissolved facilitates peeling of the oxidation catalyst layer. This causes a decrease in durability of the anode. In contrast to this, providing the oxide layer on the surface of the conductive substrate makes it possible to suppress dissolution of the conductive substrate in the above-described electrolytic solution, so that it is possible to suppress peeling of the oxidation catalyst layer and improve the durability of the anode.

The above-described anode is not limited to an anode for the above-described electrochemical reaction device, and can be used as an electrode for an electrochemical reaction device such as an existing battery or electrolysis cell. As the electrolysis cell, for example, a photoelectrochemical reaction cell, a water electrolysis cell, and so on can be cited. Similarly to an alkaline water electrolysis cell, the electrolysis cell may have an anode and a cathode, and include a structure in which the anode and the cathode are immersed in an electrolytic tank and are separated by a diaphragm. Similarly to a solid polymer electrolyte cell, the electrolysis cell may have a membrane electrode assembly (MEA) structure that is a stack of an anode, a solid polymer membrane, and a cathode. These cells are driven by a system power source, or by an external power source of renewable energy such as sunlight, wind power, or geothermal power, for example.

### [Examples]

In this example, a comparison was made between a sample of an anode fabricated by performing a heat treatment before forming an oxidation catalyst layer (Example 1) and a sample of an anode fabricated without performing the above-described heat treatment (Comparative example 1) in terms of durability.

There will be explained a method of manufacturing the sample of the anode in Example 1. A 1 cm² nickel porous body substrate was introduced into a firing furnace to be burned at 400° for one hour, to then form a nickel oxide layer. A Raman spectrum of the oxide layer measured by a Raman spectroscopic analysis had a peak at a Raman shift of 500 to 600 cm⁻¹.

A 2 mm upper portion of a nickel plate having a 2 mm width and a 7 cm length was bonded to a lower portion of the sample of the above-described porous body substrate by a metal pressing machine and a Kapton tape was applied to a portion of the nickel plate, which was not bonded to the sample, and thereby only the sample portion was exposed.

The above-described sample was immersed in an aqueous solution containing nickel nitrate hexahydrate (Ni(NO₃)₂·6H₂O) (0.1 M), and as a counter electrode, a Pt mesh electrode was used, and -0.75 V was applied to an Ag/AgCl (saturated KCl) reference electrode for 30 minuted, to thereby electrodeposit nickel hydroxide on the above-described sample. By the above-described steps, the sample of the anode in Example 1 was fabricated.

Further, of an H-type cell, the above-described sample was installed in a first room and in a second room, a Pt mesh counter electrode was installed. A glass filter was installed between the first and second rooms, and for an electrolytic solution, an aqueous solution in which potassium hydrogen carbonate (KHCO₃) was dissolved (1M) was used. To an Ag/AgCl (saturated KCl) reference electrode, -0.9 V was applied to measure a constant potential.

### (Comparative example 1)

A sample of an anode in Comparative example 1 was fabricated by steps similar to those in Example 1 except that the above-described heat treatment was omitted, and similarly to Example 1, its constant potential was measured.

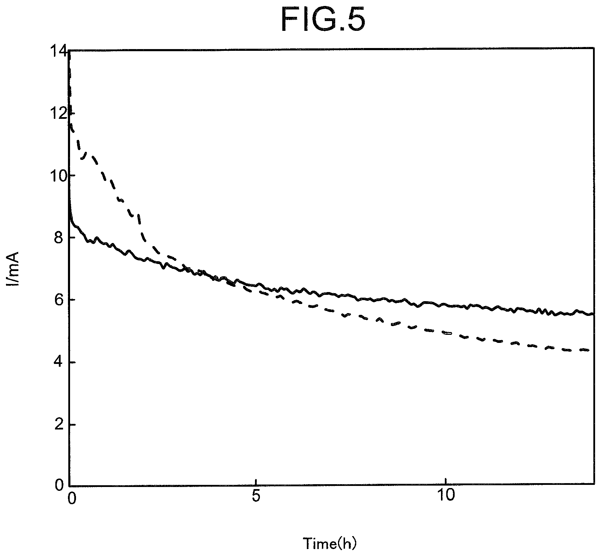

FIG. 5 is a view illustrating the relationship between time and a current density resulting from measurement of the current density of the samples of the anodes in Example 1 and Comparative example 1. The solid line indicates Example 1 and the dotted line indicates Comparative example 1. The current density measurement result using the anode in Example 1 revels that Example 1 is excellent in durability because a current value higher than that of the current density measurement result using the anode in Comparative example 1 is maintained.

While certain arrangements have been described, these arrangements have been presented by way of example only, and are not intended to limit the scope of the claims. Indeed, the magnet described herein may be embodied in a variety of other forms; furthermore, various omissions, substitutions and changes in the form of the magnet described herein may be made.

### (Numbered Clauses relating to the arrangements)

1. An electrochemical reaction device, comprising:
   an electrolytic solution tank including a first room to store a first electrolytic solution containing carbon dioxide and a second room to store a second electrolytic solution containing water;
   a cathode disposed inside the first room and configured to produce a carbon compound by a reduction reaction of the carbon dioxide;
   an anode disposed inside the second room and configured to produce oxygen by an oxidation reaction of the water; and
   a power supply connected to the cathode and the anode,
   wherein the anode includes:
      a stack selected from the group consisting of a first stack and a second stack, the first stack having a first conductive substrate and a first oxide layer on the first conductive substrate, the first conductive substrate containing nickel, the first oxide layer containing a nickel oxide, the second stack having a second conductive substrate and a second oxide layer on the second conductive substrate, the second conductive substrate containing iron, and the second oxide layer containing an iron oxide; and
      an oxidation catalyst layer disposed on the stack and containing an oxidation catalyst to oxidize the water,
      a Raman spectrum of the first oxide layer measured by a Raman spectroscopic analysis has a first peak at a Raman shift of 500 cm⁻¹ or more and 600 cm⁻¹ or less, or a Raman spectrum of the second oxide layer measured by the Raman spectroscopic analysis has a second peak at a Raman shift of 1270 cm⁻¹ or more and 1370 cm⁻¹ or less.
2. The device according to clause 1,
   wherein the second electrolytic solution further contains at least one selected from the group consisting of carbon dioxide, hydrogen carbonate ions, and carbonate ions.
3. The device according to clause 1 or clause 2,
   wherein a thickness of the first oxide layer or the second oxide layer is 2 µm or less.
4. The device according to any one of clauses 1 to 3,
   wherein the oxidation catalyst contains a metal containing at least one element selected from the group consisting of Co, Fe, Ni, Mn, Ru, and Ir, a metal oxide, a metal hydroxide, or a metal nitride.
5. The device according to any one of clauses 1 to 4,
   wherein the first oxide layer is a thermal oxidization film of the first conductive substrate, and
   the second oxide layer is a thermal oxidization film of the second conductive substrate.
6. A method of manufacturing an anode for an electrochemical reaction device, comprising:
   heating a first conductive substrate containing nickle under an atmosphere containing oxygen to form a first oxide layer containing a nickel oxide on the first conductive substrate, or heating a second conductive substrate containing iron under an atmosphere containing oxygen to form a second oxide layer containing an iron oxide on the second conductive substrate; and
   forming an oxidation catalyst layer on the first oxide layer or the second oxide layer, the oxidation catalyst layer containing an oxidation catalyst to oxidize water.
7. A method of manufacturing an anode for an electrochemical reaction device, comprising:
   depositing a precursor of a nickel oxide on a first conductive substrate containing nickel, or depositing a precursor of an iron oxide on a second conductive substrate containing iron;
   heating the precursor of the nickel oxide under an atmosphere containing oxygen to form a first oxide layer containing the nickel oxide, or heating the precursor of the iron oxide under an atmosphere containing oxygen to form a second oxide layer containing the iron oxide; and
   forming an oxidation catalyst layer on the first or second oxide layer, the oxidation catalyst layer containing an oxidation catalyst to oxidize water.

## Claims

1. An electrochemical reaction device, comprising:
an electrolytic solution tank including a first room to store a first electrolytic solution containing carbon dioxide and a second room to store a second electrolytic solution containing water;
a cathode disposed inside the first room and configured to produce a carbon compound by a reduction reaction of the carbon dioxide;
an anode disposed inside the second room and configured to produce oxygen by an oxidation reaction of the water; and
a power supply connected to the cathode and the anode,
wherein the anode includes:
a stack selected from the group consisting of a first stack and a second stack, the first stack having a first conductive substrate and a first oxide layer on the first conductive substrate, the first conductive substrate containing nickel, the first oxide layer containing a nickel oxide, the second stack having a second conductive substrate and a second oxide layer on the second conductive substrate, the second conductive substrate containing iron, and the second oxide layer containing an iron oxide; and
an oxidation catalyst layer disposed on the stack and containing an oxidation catalyst to oxidize the water,
a Raman spectrum of the first oxide layer measured by a Raman spectroscopic analysis has a first peak at a Raman shift of 500 cm⁻¹ or more and 600 cm⁻¹ or less, or a Raman spectrum of the second oxide layer measured by the Raman spectroscopic analysis has a second peak at a Raman shift of 1270 cm⁻¹ or more and 1370 cm⁻¹ or less.

2. The device according to claim 1,
wherein the second electrolytic solution further contains at least one selected from the group consisting of carbon dioxide, hydrogen carbonate ions, and carbonate ions.

3. The device according to claim 1 or claim 2,
wherein a thickness of the first oxide layer or the second oxide layer is 2 µm or less.

4. The device according to any one of claims 1 to 3,
wherein the oxidation catalyst contains a metal containing at least one element selected from the group consisting of Co, Fe, Ni, Mn, Ru, and Ir, a metal oxide, a metal hydroxide, or a metal nitride.

5. The device according to any one of claims 1 to 4,
wherein the first oxide layer is a thermal oxidization film of the first conductive substrate, and
the second oxide layer is a thermal oxidization film of the second conductive substrate.

6. A method of manufacturing an anode for an electrochemical reaction device, comprising:
heating a first conductive substrate containing nickle under an atmosphere containing oxygen to form a first oxide layer containing a nickel oxide on the first conductive substrate, or heating a second conductive substrate containing iron under an atmosphere containing oxygen to form a second oxide layer containing an iron oxide on the second conductive substrate; and
forming an oxidation catalyst layer on the first oxide layer or the second oxide layer, the oxidation catalyst layer containing an oxidation catalyst to oxidize water.
